# EUROPEAN PATENT APPLICATION

(11) **EP 4 810 805 A1**
(43) Date of publication of application: **23.09.2026**
(21) Application number: 26162324.3
(22) Date of filing: 04.03.2026
(51) Int. Cl.: F15B 1/02, B60T 17/00, B62D 5/07, B62D 5/32, F15B 1/033, F15B 11/16, E02F 9/22, F15B 20/00, F15B 21/08, F15B 19/00

(54) **CHARGING SYSTEM OF A HYDRAULIC ACCUMULATOR FOR AN AGRICULTURAL OR WORK VEHICLE**

(30) Priority: 17.03.2025 IT 202500005343
(71) Applicant: CNH Industrial Italia S.p.A., 10156 Torino (IT)
(72) Inventor: Garramone, Adriano, 10156 Turin (IT); Greco, Piero, 10156 Turin (IT); Cirillo, Pasquale, 10156 Turin (IT); Esposito, Sebastiano, 10156 Turin (IT); Gravili, Andrea, 10156 Turin (IT); Liberti, Stefano, 10156 Turin (IT)
(74) Representative: CNH Industrial IP Department

(57) **Abstract**

Agricultural or work vehicle comprising a processing unit (UCM), at least one hydraulic actuator (A1 - A3) served by a working part, a control lever (JK, RL) to control said at least one hydraulic actuator, a hydraulic pump (P), a hydraulic accumulator (HT), at least one open-centre directional valve (V1 - V3) operatively connected to control said at least one hydraulic actuator (A1 - A3) in function of an electrical signal generated by said control lever (JK, RL), a hydraulic oil collection tank (T), a diverter valve (V) arranged to alternatively connect a first hydraulic line for partialisation (PR) of the open-centre directional valve with said collection tank (T) and with said hydraulic accumulator (HT), when the following conditions are simultaneously verified: a) a pressure value measured at the hydraulic accumulator (HT) is lower than a first predetermined threshold (Th1) and b) said control lever (JK, RL) is in position of rest.

## Description

### Field of the invention

The present invention relates to a system for recharging a hydraulic accumulator for an agricultural or work vehicle. The tank can serve a steering system and/or a service brake system of the same vehicle. The work vehicle comprises a hydraulically operated work member, such as an arm, a bucket, a hydraulic lift.

### State of the art

Work or agricultural vehicles are often equipped with a work organ operated by hydraulic actuators.

The so-called "Compact wheel loaders" (CWL), are equipped with a hydraulic circuit to power the hydraulic actuators and to power the hydraulic brake system as well as the steering system.

The steering system requires a flow of hydraulic oil to operate at least one hydraulic actuator operationally connected to the vehicle steering wheels, as well as the service brake system requires pressurized hydraulic oil to operate the brakes. Without sufficient pressure, the brakes do not close to brake the vehicle.

An action on the brake pedal results in an increase in this hydraulic pressure to close the brakes.

At least the portion of the hydraulic circuit that controls the hydraulic actuators relating to the work organ is open-center.

In other words, each actuator is controlled by an open-center electro-hydraulic directional valve, electrically controlled in response to a deviation of a control lever. The control lever generally consists of a joystick and/or a roller associated with the upper end of the joystick, arranged in a vehicle cabin.

Open-center electro-hydraulic control valves are widely used in the field of operating machinery and in the field of agricultural and work vehicles for the control of their hydraulic components such as arms, buckets and auxiliary organs.

Such valves are controlled by an electrical signal generated by a processing unit operationally connected to the control lever, in a manner proportional to the angular deviation of the control lever and/or roller with respect to a rest position.

As a result of the electrical signal applied to the electro-hydraulic valve, a relative movable spool moves inside the valve, dividing, in a first part of its stroke, a first flow of hydraulic oil intended for the respective hydraulic actuator and a second flow of hydraulic oil intended for the hydraulic oil collection tank through a discharge line; in conditions of maximum valve opening, the entire flow of hydraulic oil is directed to the hydraulic actuator, vice versa, in conditions of release of the control lever, the valve is in the closed condition, directing the entire flow of hydraulic oil to the hydraulic oil collection tank.

Each control valve is connected to the hydraulic collection tank by means of a discharge line.

A hydraulic pump, typically driven by a prime mover that can be a thermal or electric engine, is operationally connected to the collection tank to suck hydraulic oil and feed a priority valve.

Conventional hydraulic power steering systems generally include a steering gear having a hydraulic motor fed primarily by the priority valve. The remaining oil is sent secondarily to open-center control valves for controlling the at least one work organ.

Thus, the hydraulic oil pumped by the hydraulic pump is sent to the priority valve which has the task of primarily satisfying the demands of the steering system and sending the residual flow to other actuators of the arm, bucket, hydraulic lift, etc..

With regard to the steering system, the steering wheel is connected to a rotary control valve that directs hydraulic fluid to the hydraulic motor in response to a clockwise or counterclockwise rotation of the steering wheel. The hydraulic motor is operatively connected to the steering linkages of the vehicle wheels to cause a turn.

In work or agricultural vehicles, the steering system is generally based on a gerotor and therefore, in emergency conditions, i.e. in the absence of oil from the hydraulic pump, the oil is pumped by the action of the operator on the steering wheel. Evidently, the effort to operate the steering wheel is significantly increased and steering is significantly slower.

The latest technical regulations require the implementation of auxiliary means in addition to the gerotor.

Generally, the auxiliary means consist of a hydraulic accumulator and a second, emergency pump, driven by the prime mover, which feeds the hydraulic accumulator.

This leads to a significant increase in the costs and weight of the vehicle.

Unless specifically excluded in the detailed description that follows, what is described in this chapter is to be considered as an integral part of the detailed description.

### Summary of the invention

The purpose of the present invention is to indicate a system for recharging a hydraulic accumulator without implementing a secondary pump.

The basic idea of the present invention is based on the fact that the portion of the hydraulic circuit supplying a hydraulic actuator served by a hydraulic organ is equipped with a corresponding open-center electro-hydraulic directional valve with a discharge line connecting the same valve to the hydraulic oil collection tank. According to the present invention, the hydraulic accumulator is connected to the discharge line by means of a diverter valve.

The processing unit is configured to acquire a signal representing a pressure value associated with the hydraulic accumulator and control the diverter valve to recharge the hydraulic accumulator when said pressure value is lower than a first threshold and at the same time it is found that the at least one open-center electro-hydraulic directional valve is completely closed, i.e. when the corresponding control lever is in the rest position.

Preferably, the processing unit is also configured to interrupt the recharging of the hydraulic accumulator when said pressure value is higher than a third threshold higher than the first pressure threshold.

According to a preferred aspect of the invention, when the pressure value is lower than a second pressure threshold lower than the first pressure threshold, the processing unit is configured to open the diverter valve independently of the condition of the open-center electro-hydraulic directional valve and to simultaneously apply a reduction coefficient to an electrical control signal of the open-center electro-hydraulic directional valve, so as to ensure a predetermined flow of hydraulic oil to the hydraulic accumulator independent of the operation of the work organ. Preferably, said oil flow is controlled in a closed loop by means of the pressure measurement operated on the hydraulic accumulator.

In the context of this description, "opening" the diverter valve means that it interconnects the discharge line with the hydraulic accumulator.

The dependent claims describe preferred variants of the invention, forming an integral part of this description.

### Brief description of the figures

Further objects and advantages of the present invention will be apparent from the following detailed description of an embodiment thereof (and variations thereof) and the accompanying drawings given purely for explanatory and nonlimiting purposes, in which:
Figure 1 shows an exemplary electro-hydraulic diagram of a portion of a modified hydraulic circuit according to the present invention;
Figure 2 shows an application of the diagram of Figure 1, coupled to a hydraulic steering system;
Figure 3 shows an application of the diagram of Figure 1, coupled to a hydraulic brake system.

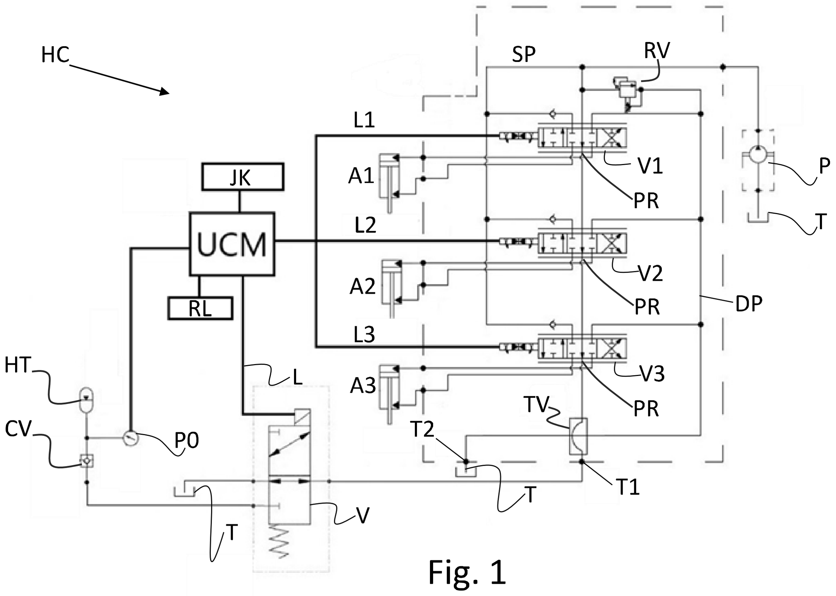

The configuration of the hydrostat shown in Figure 1 is not to be considered limiting.

It should also be noted that the terms "first", "second", "third", "upper", "lower" and the like may be used herein to distinguish various elements. These terms do not imply a spatial, sequential or hierarchical order for the modified elements unless specifically indicated or inferred from the text.

The elements and features illustrated in the various preferred embodiments, including the drawings, may be combined with each other without departing from the scope of protection of this application as described below.

### Detailed description

Figure 1 shows an example of an electro-hydraulic scheme according to the present invention.

A hydraulic pump P is connected to a prime mover (not shown) to be driven in rotation. It is arranged to suck hydraulic oil from a collection tank T and pump it, by means of a supply line SP, towards at least one open-center electro-hydraulic directional valve V1, V2, V3, hereinafter referred to for simplicity as a "directional valve".

The pressure on the supply line SP is limited to a maximum value by means of a pressure relief valve RV.

The directional valve supplies a respective actuator A1, A2, A3, which is used to operate a work organ, such as a boom, a bucket, a hydraulic lift (not shown).

The hydraulic actuator is generally double-acting, therefore it comprises two opposing chambers connected to two ports of the directional valve so as to be able to implement, for example, the lifting and lowering of the boom.

The control of the directional valve is achieved by a control lever JK, generally in the form of a Joystick, often equipped with a roller RL.

Some actuators, such as those of the arm and bucket are generally controlled by giving a deviation to the joystick lever with respect to a rest position. Other actuators can be controlled by the roller RL, for example those for the control of a rotating brush that can be connected to the arm.

Each directional valve is operationally connected to a discharge line PR, since, as described above, they have the task of choking the flow of hydraulic oil received via the supply line SP to divert it towards the respective actuator and/or the collection tank T via the discharge line PR. According to the present invention, the discharge line PR is connected to the collection tank T by means of a diverter valve V.

It is important to note that a directional valve that controls a double-acting hydraulic actuator is generally connected to the collection tank T with two ports:
- a first discharge port T1, connected to the discharge line PR that allows to partialize the flow of hydraulic oil pumped by the pump P;
- a second emptying port T2, connected to an emptying line DP that allows one of the actuator chambers to empty while the other is filled.

According to the present invention, the second port T2 is always directly connected to the collection tank T, while the first port T1 is connected to the discharge line PR, therefore, the connection of the first discharge port T1 with the collection tank T is conditioned by the operating condition of the diverter valve V.

For this reason, the connection TV is shown in the figures, which allows the direct connection of the first discharge port T1 with the collection tank T, independently of the emptying line DP.

The diverter valve is said to be "closed" when it connects the discharge line PR with the collection tank T.

The diverter valve is also operationally connected to the hydraulic accumulator HT. Therefore, it is said to be "open" when it connects the discharge line PR with the hydraulic accumulator HT.

A check valve CV is interposed between the diverter valve V and the hydraulic accumulator HT so as to prevent the hydraulic oil loaded in the hydraulic accumulator from flowing back towards the directional valve.

The diverter valve V is electrically controllable and operationally connected to the processing unit UCM which is configured to control it by the signal L.

The processing unit UCM is operationally connected with the control lever JK and/or the roller RL so as to receive a signal representative of a command given by the control lever and/or roller and to proportionally control the opening of a corresponding directional valve V1 - V3 by means of the signals L1 - L3.

Therefore, the control of the directional valve is mediated by the processing unit.

A pressure sensor P0 is associated with the hydraulic accumulator. The pressure sensor is operationally connected with the processing unit so that it can know the operating conditions of the hydraulic accumulator.

According to the present invention, the processing unit is configured to acquire the pressure signal generated by the pressure sensor P0 and when it is found that
a) the measured pressure value is lower than a first predetermined threshold Th1 and
b) the control lever JK, RL is in the rest position,
the processing unit is configured to control the diverter valve V in opening.

Obviously, when at least one of the two conditions a), b) is not verified, the processing unit is configured to control the diverter valve V to close.

When the control lever JK, RL is in the rest position, the directional valve is closed in the sense that all the hydraulic oil received from the hydraulic pump P is sent to the collection tank T and the opposing chambers of the actuator are closed, so that the actuator is blocked and stopped.

The loading of the hydraulic accumulator HT can follow a hysteresis logic, in the sense that the loading stops when the pressure value measured exceeds a third pressure threshold Th3 > Th1.

According to a preferred variant of the invention, when the pressure value measured by the pressure sensor P0 is lower than a second threshold Th2 < Th1, then the processing unit commands the opening of the diverter valve V and simultaneously introduces a reduction coefficient to the electrical control signal of the directional valve. Obviously, when the value of the pressure signal is lower than Th2, condition b) is no longer taken into account, so much so that the reduction coefficient is applied which has the purpose of ensuring a flow of hydraulic oil along the discharge line PR regardless of the deviation introduced in the control lever JK and/or in the roller RL.

Since the electrical control signal of the directional valve is proportional to a deflection of the control lever with respect to a relative rest position according to a proportionality factor, the application of the reduction coefficient has the purpose of reducing the proportionality factor, therefore, it essentially affects the slope of the proportionality curve.

According to a preferred variant of the invention, the reduction coefficient is dynamically varied so as to keep unchanged, in closed loop, the value of the time derivative of the signal representing the pressure to the hydraulic accumulator.

In other words, it is arranged so that the recharging of the hydraulic accumulator is independent of the operation of the directional valve and also of the rotation speed of the hydraulic pump P.

The application of the reduction coefficient ends when the measured pressure value returns to being higher than the third pressure threshold Th3.

The two operating conditions can be summarized as a first "soft" recharging condition, in which the actuation of the hydraulic actuator A1 - A3 does not suffer any penalty and a "hard" recharging condition in which the actuation of the hydraulic actuator A1 - A3 suffers a penalty to allow the recharging of the hydraulic accumulator HT.

Taking into account the variant just described, it can be expected that the processing unit UCM is configured to connect the first partialization port T1 of the open-center directional valve with said collection tank T when
- the pressure value measured at the hydraulic accumulator HT is greater than the third predetermined threshold Th3 if hysteretic behavior is expected or
- the pressure value measured at the hydraulic accumulator is greater than the second predetermined threshold Th2 and at the same time said control lever JK, RL is in a position other than the rest position.

It is worth highlighting that the portion of the hydraulic circuit HC is shown in figure 1 as directly connected to the hydraulic pump P.

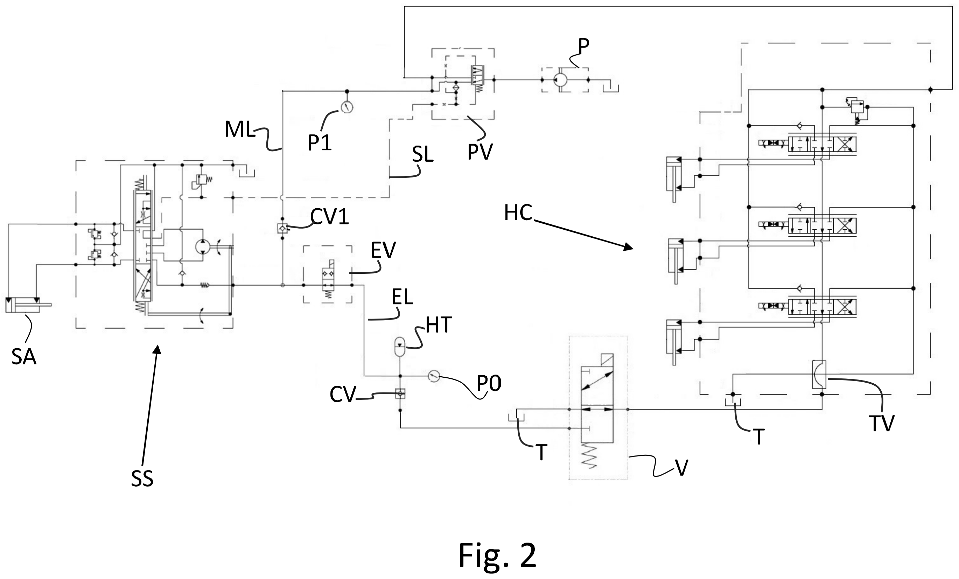

The portion HC of the hydraulic circuit can be connected to the hydraulic pump P by means of the priority valve PV shown in figure 2.

In figure 2 the HC portion of the circuit shown in figure 1 can be recognized. For convenience, the UCM processing unit and the human/machine interface devices JK, RL are not shown.

In figure 2, the charging system is served by a SS steering system.

The steering system SS is fed by the priority valve PV through the main hydraulic line ML on which a non-return valve CV1 is placed, which prevents the backflow of hydraulic oil towards the priority valve PV.

Preferably, the steering system is a closed-center steering system with a sensing line SL that allows the flow rate of hydraulic oil generated by the hydraulic pump to be adjusted as a function of the load sensed by the steering system.

The hydraulic steering system SS, known in itself, is used to control the hydraulic actuator SA arranged to control the steering levers (not shown) connected to the wheels of a steering vehicle axle.

The steering system SS is also powered by the emergency line EL connected to the hydraulic accumulator HT.

A normally closed emergency valve EV is arranged on the emergency line EL to connect the hydraulic accumulator with the steering system. The controllable valve EV is of the ON/OFF type and is controlled by the processing unit which is configured to acquire a second pressure signal generated by the pressure sensor P1 arranged on the main hydraulic line ML. The processing unit is configured to command the emergency valve EV to open in response to the fact that the second pressure signal has a pressure value lower than a predetermined limit threshold ThL.

Advantageously, continuity of operation is guaranteed to the steering system without the implementation of an auxiliary hydraulic pump.

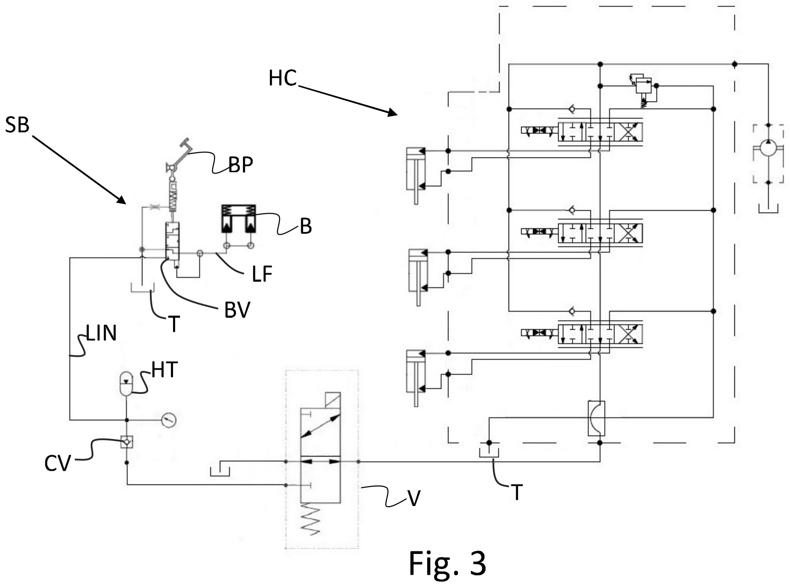

Figure 3 shows a further application of the present invention that can be combined with the application of figure 2.

In figure 3, the hydraulic accumulator HT serves a service brake system SB, equipped in a known manner with a proportional brake valve BV.

The hydraulic service brake system SB, comprising the brake valve BV operationally connected to the hydraulic accumulator by means of the supply line LIN and to a braking device B by means of the brake line LF.

The brake valve is arranged to
- connect the brake line LF with the storage tank T when a related brake pedal BP is released and
- connect the supply line LIN with the brake line LF at a deflection of the brake pedal, so that a pressure value in the braking device is proportional to said deflection.

Although the priority valve PV is not shown in figure 3 for ease of representation, it is nevertheless present similarly to that shown in figure 2.

From the description given above, the technician in the field is able to realize the object of the invention without introducing further construction details.

## Claims

1. Agricultural or work vehicle comprising
- a processing unit (UCM),
- at least one hydraulic actuator (A1 - A3) serving a work organ,
- a control lever (JK, RL) to control said at least one hydraulic actuator,
- a hydraulic pump (P),
- a hydraulic accumulator (HT),
- a portion of hydraulic circuit (HC) operatively connected to the hydraulic pump (P) to be supplied, wherein the portion of hydraulic circuit (HC) comprises
. at least one open-center directional valve (V1 - V3) operatively connected to control said at least one hydraulic actuator (A1 - A3) in function of an electrical signal generated by said control lever (JK, RL),
. a hydraulic oil collection tank (T),
. a diverter valve (V) arranged to alternately connect a first partialization hydraulic line (PR) of the open-center directional valve with said collection tank (T) and with said hydraulic accumulator (HT),
wherein the processing unit (UCM) is configured to connect the first partialization hydraulic line (PR) of the open-center directional valve with said hydraulic accumulator (HT) by means of the diverter valve (V) when the following conditions are simultaneously verified:
a) a pressure value measured at the hydraulic accumulator (HT) is lower than a first predetermined threshold (Th1) and
b) said control lever (JK, RL) is in the rest position.

2. Vehicle according to claim 1, wherein said processing unit (UCM) is further configured to
- connect the first partialization hydraulic line (PR) of the open-center directional valve with said hydraulic accumulator (HT) by means of the diverter valve (V) and at the same time
- introduce a reduction coefficient to an electrical control signal (L1 - L3) of the at least one directional valve (V1 - V3),
when said pressure value measured at the hydraulic accumulator (HT) is lower than a second threshold (Th2) lower than the first threshold (Th1).

3. Vehicle according to claim 2, wherein said electrical control signal (L1 - L3) is proportional to a deflection of the control lever (JK, RL) with respect to a rest position according to a proportionality factor.

4. Vehicle according to claim 2 or 3, wherein said reduction coefficient is dynamically varied so as to maintain unchanged, in a closed loop, a value of a derivative in time of the signal representing the pressure to the hydraulic accumulator.

5. Vehicle according to one of claims 2 - 4, wherein said reduction coefficient is adapted to reduce said proportionality factor of the electrical control signal.

6. Vehicle according to any of the preceding claims 2 - 5, wherein the processing unit (UCM) is configured to connect the first hydraulic partialization line (PR) of the open-center directional valve with said collection tank (T) when
- the pressure value measured at the hydraulic accumulator is greater than a third predetermined threshold (Th3) greater than said first predetermined threshold (Th1) or
- the pressure value measured at the hydraulic accumulator is greater than said second predetermined threshold (Th2) and at the same time said control lever (JK, RL) is in a position other than said rest position.

7. Vehicle according to any of the preceding claims, wherein the at least one hydraulic actuator (A1 - A3) is double-acting comprising two opposing chambers and wherein the respective at least one open-centre directional valve (V1 - V3) comprises a second hydraulic emptying line (DP) which allows one of the actuator chambers to connect to the collection tank (T) while the other chamber is operationally connected to the hydraulic pump (P) and wherein the second hydraulic emptying line (DP) is directly connected to the collection tank (T).

8. A vehicle according to any preceding claim, further comprising a hydraulic steering system (SS) operatively connected with said hydraulic pump (P) by means of a main hydraulic line (ML) and a priority valve (PV) disposed on the main hydraulic line, configured to supply the steering system (SS) primarily and the hydraulic circuit portion (HC) secondarily, and wherein the steering system (SS) is operatively connected with said hydraulic accumulator (HT) by means of an emergency hydraulic line (EL).

9. Vehicle according to claim 8, wherein the emergency hydraulic line (EL) comprises a normally closed emergency valve (EV), operatively connected to said processing unit (UCM), and wherein the processing unit is configured to command an opening of the emergency valve (EV) in response to the fact that a pressure value measured on said main hydraulic line (ML) is lower than a predetermined limit threshold (ThL).

10. A vehicle according to any preceding claim, further comprising a hydraulic service brake system (SB), comprising a brake valve (BV) operatively connected with the hydraulic accumulator (HT) by means of a supply line (LIN) and with a braking device (B) by means of a brake line (LF), and wherein the brake valve (BV) is a proportional valve arranged to
- connect the brake line (LF) with the accumulation tank (T) when a related brake pedal (BP) is released, and
- connect the supply line (LIN) with the brake line (LF) to a deflection of the brake pedal (BP), such that a pressure value in the braking device is proportional to said deflection.
